# EUROPEAN PATENT APPLICATION

(11) **EP 1 768 373 A1**
(43) Date of publication of application: **28.03.2007**
(21) Application number: 06114381.4
(22) Date of filing: 23.05.2006
(51) Int. Cl.: H04N 1/00, H04N 1/32

(54) **Image forming apparatus, control method and program for post-processing combined print jobs**

(30) Priority: 01.09.2005 JP 2005253420
(71) Applicant: KONICA MINOLTA BUSINESS TECHNOLOGIES, INC., Tokyo 100-0005 (JP)
(72) Inventor: Yokobori, Jun Konica Minolta Business Techn. Inc., Tokyo, 192-8505 (JP); Nakamura, Shoichi Konica Minolta Bus. Techn. Inc., Tokyo, 192-8505 (JP); Osawa, Masahiro Konica Minolta Bus. Techn. Inc., Tokyo, 192-8505 (JP)
(74) Representative: Henkel, Feiler & Hänzel

(57) **Abstract**

An image forming apparatus comprises a storage section which stores a file including an image data and a predetermined post-processing condition; a reading section which reads out a plurality of files to be combined from the storage section; a combination section which combines the plurality of files to produce a combined file; and a control section which controls the post-processing section to conduct a first mode in which the control section invalidates the predetermined post-processing condition set to each of the plurality of files and a post-processing is conducted based on a post-processing condition set to the whole of the plurality of files, or a second mode in which a post-processing is conducted based on the predetermined post-processing condition set to each of the plurality of files.

## Description

This application is based on Japanese Patent Application No. 2005-253420 filed on September 1, 2005, in Japanese Patent Office, the entire content of which is hereby incorporated by reference.

### TECHNICAL FIELD

The present invention relates to an image forming apparatus that combines a plurality of files for outputting, a control method and a program.

### BACKGROUND

In general, an image forming apparatus such as a copying machine and a printer is equipped with a memory means such as a hard disk, so that image data acquired through reading by a scanner and image data received from external equipment can be stored. For example, by storing an image data file by which an image was formed once, it is not necessary to read a document or to receive data again, because it is possible to output by reading the stored file, later on.

Further, it has been proposed an information processing apparatus wherein, when outputting by combining jobs as one job, the jobs are judged whether they can be combined or not based on properties of the jobs, and when a result of the judgment shows that they cannot be combined, a notification to that effect is given, and a part or whole of the properties of the jobs to be combined can be eliminated or changed (for example, see Patent Document 1). In this information processing apparatus, the subject of the jobs which may be combined can be broadened, because job properties can be eliminated or changed.

It has further been proposed an image forming apparatus wherein plural jobs each having different input and output conditions are combined as a series of jobs, and a series of printing output processes each complying with output condition for each of the combined plural jobs are practiced (for example, see Patent Document 2).
(Patent Document 1) TOKKAI No. 2003-177879
(Patent Document 2) TOKKAI No. 2005-37549

However, when reading out plural files stored and thereby combining them for outputting, there have been an occasion wherein common post-processing needs to be conducted for all files, and an occasion wherein output needs to be conducted while keeping post-processing established for each file in advance.

### SUMMARY

An object of the invention is to provide an image forming apparatus capable of conducting post-processing that meets an intension of a user, and to provide a control method and a program.

An image forming apparatus, comprising:
a storage section which stores a file including an image data and a predetermined post-processing condition, a post-processing being conducted for a recording medium based on the post-processing condition;
a reading section which read out a plurality of files to be combined from the storage section;
a combination section which combines the plurality of files read out from the storage section to produce a combined file;
a image forming section which forms an image on a recording medium based on the combined file;
a post-processing section which post-processes the recording medium on which the image is formed; and
a control section which controls the post-processing section,
wherein the control section controls the post-processing section to conduct a first mode in which the control section invalidates the predetermined post-processing condition set to each of the plurality of files and a post-processing is conducted based on a post-processing condition set to the whole of the plurality of files, or a second mode in which a post-processing is conducted based on the predetermined post-processing condition set to each of the plurality of files.

An image forming apparatus, comprising:
a storage section which stores a file including an image data and a predetermined post-processing condition, a post-processing being conducted for a recording medium based on the post-processing condition;
a reading section which read out a plurality of files to be combined from the storage section;
a combination section which combines the plurality of files read out from the storage section to produce a combined file;
a image forming section which forms an image on a recording medium based on the combined file;
a post-processing section which post-processes the recording medium on which the image is formed;
a post-processing condition adding section which adds a post-processing condition, wherein if the second post-processing mode is selected, the post-processing condition adding section adds only a post-processing condition, which is allowed to be added in relation to the predetermined post-processing condition set to each of the plurality of files, to the whole of the plurality of files; and
a control section which controls the post-processing section,
wherein the control section controls the post-processing section to post-process the plurality of files based on the predetermined post-processing condition and the post processing condition added by the post-processing condition adding section.

An image forming apparatus, comprising:
a storage section which stores a file including an image data and a predetermined post-processing condition, a post-processing being conducted for a recording medium based on the post-processing condition;
a reading section which read out a plurality of files to be combined from the storage section;
a combination section which combines the plurality of files read out from the storage section to produce a combined file;
a image forming section which forms an image on a recording medium based on the combined file;
a post-processing section which post-processes the recording medium on which the image is formed;
a post-processing condition adding or modifying section which adds a post-processing condition or modifies the predetermined post-processing condition; and
a control section which controls the post-processing section,
wherein the control section controls the post-processing section to post-process a file, whose post-processing condition is added or modified, based on the added or modified post-processing condition or to post-process a file, whose post-processing condition is not added or modified, based on the predetermined post-processing condition.

A control method, comprising steps of:
reading out a plurality of files to be combined from a storage section which stores files, each of which including an image data and a predetermined post-processing condition by which a post-processing is conducted when the image data is outputted;
combining the plurality of files read out from the storage section to produce a combined file;
forming an image on a recording medium based on the combined file; and
post-processing the recording medium on which the image is formed,
wherein the post-processing step includes a step of conducting a first mode in which the predetermined post-processing condition set to each of the plurality of files is invalidated and a post-processing is conducted based on a post-processing condition set to the whole of the plurality of files, or a second mode in which a post-processing is conducted based on the predetermined post-processing condition set to each of the plurality of files.

A control method, comprising steps of:
reading out a plurality of files to be combined from a storage section which stores files, each of which including an image data and a predetermined post-processing condition by which a post-processing is conducted when the image data is outputted;
combining the plurality of files read out from the storage section to produce a combined file;
forming an image on a recording medium based on the combined file;
adding a post-processing condition; and
post-processing the recording medium on which the image is formed,
wherein, in the post-processing condition adding step, only a post-processing condition, which is allowed to be added in relation to the predetermined post-processing condition set to each of the plurality of files, is added to the whole of the plurality of files, and
in the post-processing step, post-processing the plurality of files based on the predetermined post-processing condition set to each of the plurality of files and the post processing condition added in the post-processing condition adding step.

A control method, comprising steps of:
reading out a plurality of files to be combined from a storage section which stores files, each of which including an image data and a predetermined post-processing condition by which a post-processing is conducted when the image data is outputted;
combining the plurality of files read out from the storage section to produce a combined file;
forming an image on a recording medium based on the combined file;
adding a post-processing condition or modifying the predetermined post-processing condition; and
post-processing the recording medium on which the image is formed,
wherein, in the post-processing step, post-processing a file, whose post-processing condition is added or modified, based on the added or modified post-processing condition, or post-processing a file, whose post-processing condition is not added or modified, based on the predetermined post-processing condition.

A program for making a computer to execute a process, the process comprising steps of:
reading out a plurality of files to be combined from a storage section which stores files, each of which including an image data and a predetermined post-processing condition by which a post-processing is conducted when the image data is outputted;
combining the plurality of files read out from the storage section to produce a combined file;
forming an image on a recording medium based on the combined file; and
post-processing the recording medium on which the image is formed,
wherein the post-processing step includes a step of conducting a first mode in which the predetermined post-processing condition set to each of the plurality of files is invalidated and a post-processing is conducted based on a post-processing condition set to the whole of the plurality of files, or a second mode in which a post-processing is conducted based on the predetermined post-processing condition set to each of the plurality of files.

A program for making a computer to execute a process, the process comprising steps of:
reading out a plurality of files to be combined from a storage section which stores files, each of which including an image data and a predetermined post-processing condition by which a post-processing is conducted when the image data is outputted;
combining the plurality of files read out from the storage section to produce a combined file;
forming an image on a recording medium based on the combined file;
adding a post-processing condition; and
post-processing the recording medium on which the image is formed,
wherein, in the post-processing condition adding step, only a post-processing condition, which is allowed to be added in relation to the predetermined post-processing condition set to each of the plurality of files, is added to the whole of the plurality of files, and
in the post-processing step, post-processing the plurality of files based on the predetermined post-processing condition set to each of the plurality of files and the post processing condition added in the post-processing condition adding step.

A program for making a computer to execute a process, the process comprising steps of:
reading out a plurality of files to be combined from a storage section which stores files, each of which including an image data and a predetermined post-processing condition by which a post-processing is conducted when the image data is outputted;
combining the plurality of files read out from the storage section to produce a combined file;
forming an image on a recording medium based on the combined file;
adding a post-processing condition or modifying the predetermined post-processing condition; and
post-processing the recording medium on which the image is formed,
wherein, in the post-processing step, post-processing a file, whose post-processing condition is added or modified, based on the added or modified post-processing condition, or post-processing a file, whose post-processing condition is not added or modified, based on the predetermined post-processing condition.

### BRIEF DESCRIPTION OF THE DRAWINGS

Fig. 1 is a cross-sectional structural diagram of image forming apparatus 1 in First Embodiment of the present invention.
Fig. 2 is a diagram for illustrating a structure of storage of hard disk 80.
Fig. 3 (a) is a diagram showing a structure of a file preserved in hard disk 80. Fig. 3 (b) is a diagram showing established information recorded on JOB header, and Fig. 3 (c) is a diagram showing established information recorded on PAGE header.
Fig. 4 is a block diagram showing an internal structure of image forming apparatus 1.
Fig. 5 is a flow chart showing file preservation processing practiced by image forming apparatus 1.
Fig. 6 is an example of a display of user name selection image area 311.
Fig. 7 is an example of a display of BOX name selection image area 312.
Fig. 8 is an example of a display of file name input image area 313.
Fig. 9 is an example of reading image area 314.
Fig. 10 is a flow chart showing file combination processing A that is practiced by image forming apparatus 1.
Fig. 11 is a flow chart showing file selection processing.
Fig. 12 is an example of a display of user name selection image area 315.
Fig. 13 is an example of a display of BOX name selection image area 316.
Fig. 14 is an example of a display of file name selection image area 317.
Fig. 15 is an example of a display showing the state where "FILE 1" is selected in file name selection image area 317.
Fig. 16 is an example of a display showing the state where "FILE 1" and "FILE 3" are selected in file name selection image area 317.
Fig. 17 (a) is a diagram showing an example of a file selected as a subject for conducting file combination. Fig. 17 (b) is a diagram showing an output image in the case where a total post-processing setting mode is selected, and a staple is established for the selected all files. Fig. 17 (c) is a diagram showing an output image in the case where an individual post-processing setting mode is selected.
Fig. 18 is a judgment table showing whether post-processing can be added to all files for establishment of post-processing of each file or not.
Fig. 19 is a flow chart showing file combination processing B that is practiced by an image forming apparatus in Second Embodiment.
Fig. 20 is a flow chart showing file combination processing C that is practiced by an image forming apparatus in Third Embodiment.
Fig. 21 is a flow chart showing processing for a change in setting.
Fig. 22 is an example of a display of file name selection image area 318.
Fig. 23 is an example of a display of image area for a change in setting 319.
Fig. 24 is an example of a display of output setting image area 320.
Fig. 25 (a) is a diagram showing an example of a file selected as a subject for conducting file combination. Fig. 25 (b) is a diagram showing an output image in the case where an individual post-processing setting mode is selected, and post-processing conditions for FILE 5 are changed from punching to stapling.

### DETAILED DESCRIPTION OF THE PREFERRED EMBODIMENT

### (First Embodiment)

First, image forming apparatus 1 in First Embodiment of the invention will be explained in detail.

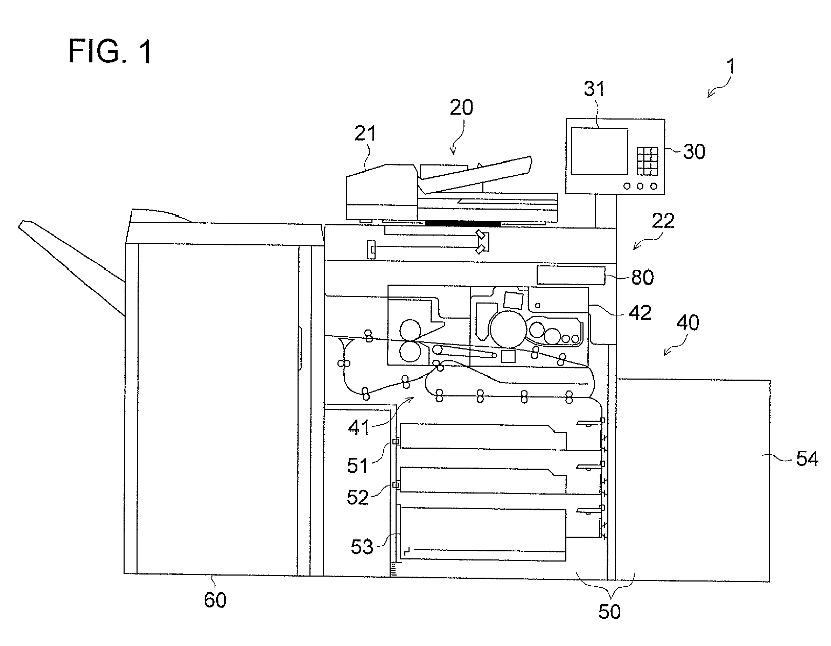

Fig. 1 shows a cross-sectional structure of the image forming apparatus 1.

As shown in Fig. 1, the image forming apparatus 1 is composed of image reading section 20, operating section 30, printer section 40, sheet-feeding unit 50, post-processing unit 60, and hard disk (Hard Disk Drive) 80.

The image reading section 20 is composed of ADF (Automatic Document Feeder) section 21 representing an automatic sheet feeding mechanism and scanner section 22. The ADF section 21 feeds a document placed on a document table and conveys it to the scanner section 22 where the document thus conveyed is subjected to light scanning conducted by the scanner section 22, to be subjected to photoelectric conversion conducted by CCD line image sensor, thus, images of the document are read.

Document image data obtained by the image reading section 20 through reading are subjected to various image processing, and they are outputted to the printer section 40 as image data for printing.

The operating section 30 is composed of display section 31, a touch panel provided to cover the display section 31 and of various functional buttons such as numeral buttons and a start button to instruct start of printing. The display section 31 is composed of LCD (Liquid Crystal Display), and it displays various operating image areas such as selection image areas showing where to read out or destination to save when reading and preserving files and displays results of various processing.

The printer section 40 is one t0 conduct image forming on printing paper representing a recording medium through an electrophotographic method, and it is composed of conveyance mechanism 41 to convey printing paper fed from sheet-feeding unit 50 and of image forming section 42 that forms images on printing paper. The image forming section 42 is composed of a photosensitive drum representing an image carrier, a charging section that charges the photosensitive drum electrostatically, an exposure section that conducts exposure scanning on a surface of the photosensitive drum based on image data, a developing section where toner adheres to the photosensitive drum, a transfer section where a toner image formed on the photosensitive drum is transferred onto printing paper, a cleaning section where residual toner on the photosensitive drum is removed and a fixing section where a toner image formed on printing paper is fixed.

The sheet-feeding unit 50 is composed of four sheet-feeding trays including sheet-feeding trays 51 - 54. Incidentally, the number of sheet-feeding trays is not limited in particular, though four sheet-feeding trays are provided in this particular case. Each of the sheet trays 51 - 54 can accept sheet types such as plain paper, backing paper, recycled paper and fine-quality paper as well as printing papers each having a different size.

The post-processing unit 60 can carry out various types of post-processing such as sorting processing for the printing paper on which an image has been formed, punching (hole making) processing, staple processing and folding processing (center folding, three-folding, four-folding, double-door folding and Z-shaped folding), and it can conduct booklet making and bookbinding.

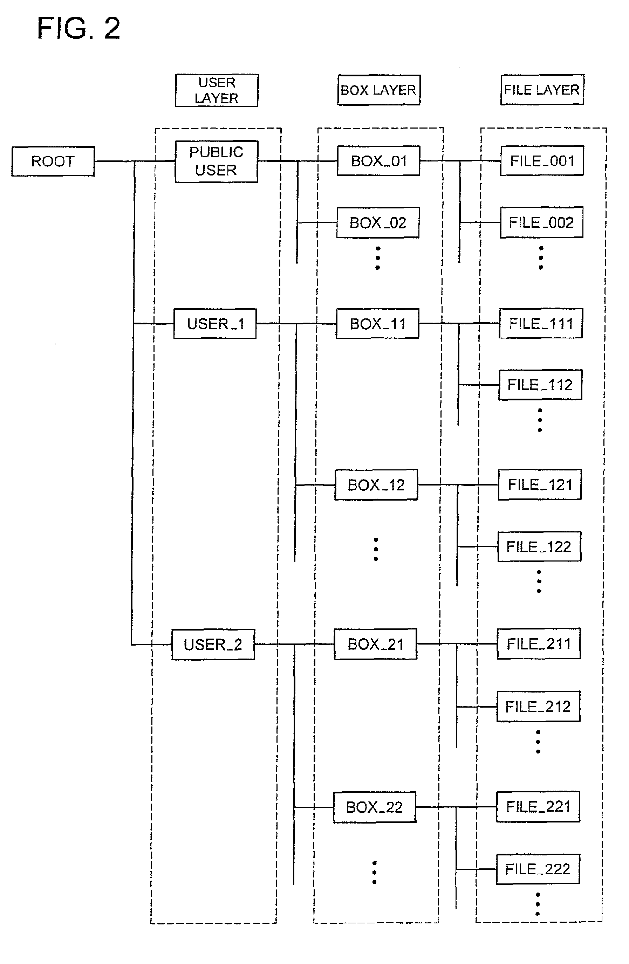

In the hard disk 80, there are preserved files including image data outputted in image forming apparatus 1 and post-processing conditions in the case of outputting the image data. As shown in Fig. 2, the memory structure of the hard disk 80 is of the hierarchical structure having three layers including a user layer, a BOX layer and a file layer. Right under the root directory that is located on the uppermost position of the layers, there is formed a folder classified for each user, as a user layer. In the layer below the user layer, one or plural folders are formed for each user as a BOX layer. In the layer below the BOX layer, there is stored an image data file as a file layer. Incidentally, a file preserved in hard disk 80 is not limited to the file which has been outputted in image forming apparatus 1, and it may also be a file which has only been inputted and has not been outputted.

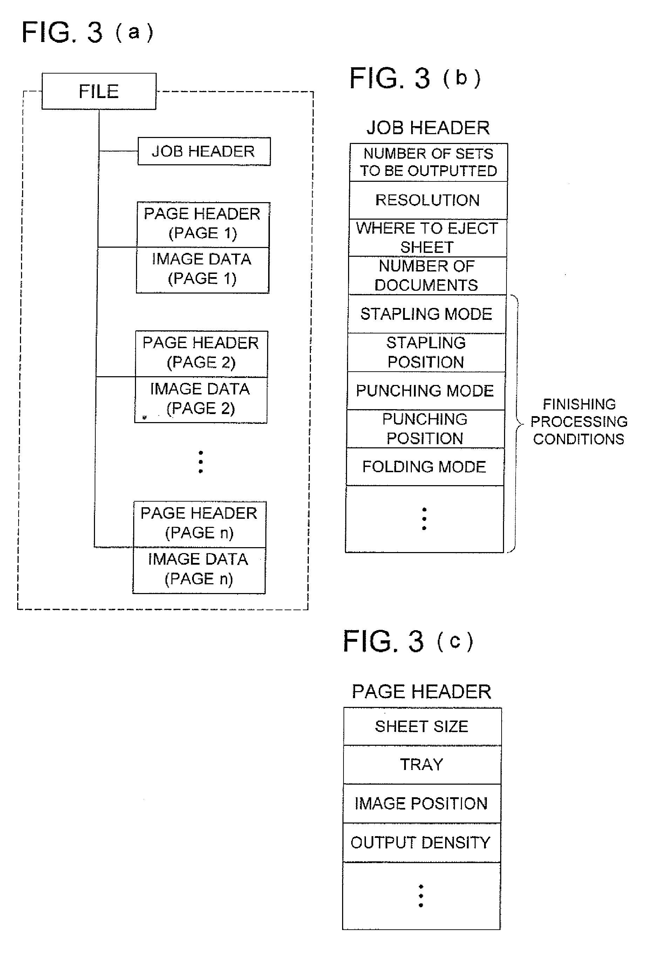

Fig. 3 (a) shows the structure of the file preserved in hard disk 80. As shown in Fig. 3 (a), the file is composed of a JOB header, a PAGE header and image data. The PAGE header and the image data are made to correspond each other for each page.

On the JOB header, there are recorded the established pieces of information relating to the whole of JOB for printing. Fig. 3 (b) shows the established pieces of information recorded on JOB header. The established pieces of information recorded on JOB header include, for example, the number of sets to be outputted, resolution, where to eject sheets, the number of documents and post-processing conditions. As the post-processing conditions, there are established a staple mode (ON/OFF), stapling positions (1 location at left/1 location at right/2 locations at left/2 locations at right/2 locations at top), punch mode (OFF/2 holes/3 holes/4 holes), punching positions (left/right/top) and folding mode (OFF/center folding/3-folding/four-folding/double-door folding/Z-shaped folding).

On the PAGE header, there is recorded the established information relating to each page for printing. Fig. 3 (c) shows the established information recorded on PAGE header. The established information recorded on PAGE header includes a sheet size, a tray, an image position and output density.

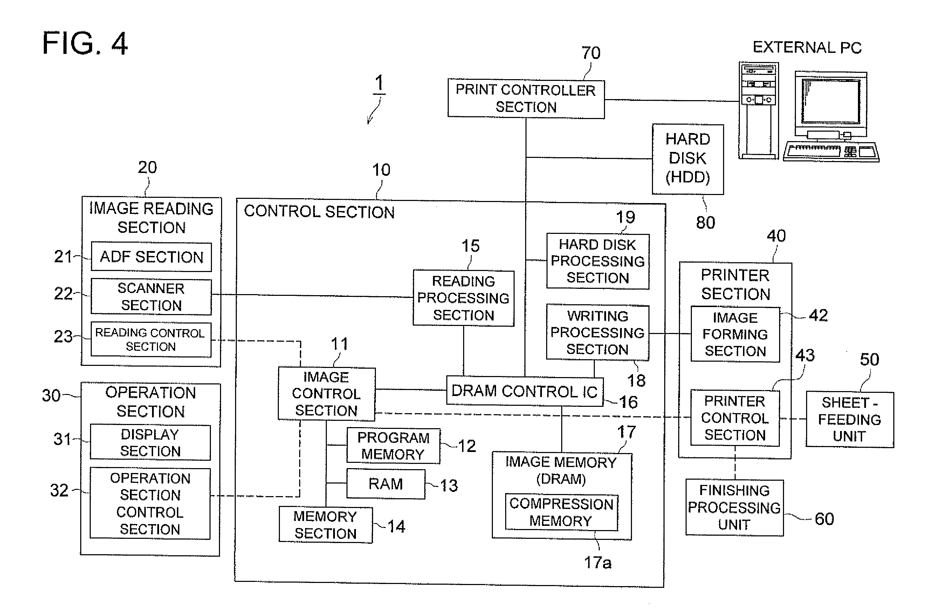

Next, an inner structure of image forming apparatus 1 will be explained as follows, referring to Fig. 4.

As shown in Fig. 4, the image forming apparatus 1 is composed of control section 10, image reading section 20, operating section 30, printer section 40, sheet-feeding unit 50, post-processing unit 60, print controller section 70 and hard disk 80. Incidentally, the same constituents as those in respective portions explained in Fig. 1 are given the same symbols, and explanations for them will be omitted here.

The control section 10 is composed of image control section 11, program memory 12, RAM (Random Access Memory) 13, memory section 14, read-processing section 15, DRAM control IC 16, image memory 17, write-processing section 18 and hard disk processing section 19.

The image control section 11 is composed of CPU (Central Processing Unit) and others, and reads various processing programs stored in the program memory 12 to control processing operations of respective sections of the image forming apparatus 1 on a generalizing basis, by cooperating with the program.

The image control section 11 controls post-processing in accordance with a total post-processing setting mode or an individual post-processing setting mode. The total post-processing setting mode is a mode that invalidates post-processing conditions established in advance for each of the plural files to be combined, and conducts post-processing based on post-processing conditions established newly for all of the plural files. The individual post-processing setting mode is a mode that conducts post-processing for each file based on post-processing conditions established in advance for each of plural files to be combined.

The program memory 12 stores various processing programs relating to printing in image forming apparatus 1.

RAM 13 forms a work area that stores temporarily various programs practiced by the image control section 11 and data relating to these programs.

The memory section 14 is composed of a nonvolatile memory, and stores various data.

The read-processing section 15 conducts shading correction processing and A/D conversion processing for analog image signals inputted from scanner section 22 of the image reading section 20, to generate digital image data. Image data thus generated are outputted to DRAM control IC 16.

Following the instruction from the image control section 11, the DRAM control IC 16 conducts compression and extension processing on image data, and controls inputting of image data in image memory 17 or outputting of image data from image memory 17. For example, when reading of image data is instructed, the DRAM control IC 16 conducts compression processing for image data inputted from the read-processing section 15, and causes compression memory 17a of image memory 17 to store them. Further, when printing output of image data is instructed, the DRAM control IC 16 reads compressed image data from the compression memory 17a, and conducts extension processing for them to output to the write-processing section 18.

The image memory 17 is composed of DRAM (Dynamic Ram), and is equipped with compression memory 17a which is a memory to store compressed image data.

The write-processing section 18 generates printing data for image forming based on image data inputted from the DRAM control IC 16, and outputs them to printer section 40.

The hard disk processing section 19 controls prescribed sequences (IDE: Integrated Drive Electronics) for making access to hard disk 80 such as reading and preservation of image data and preparation of a folder. When preservation of image data in hard disk 80 is instructed, the hard disk processing section 19 causes the DRAM control IC 16 to read out compressed image data stored in the compression memory 17a of the image memory 17, and causes hard disk 80 to store the compressed image data thus read out. Further, when reading out of image data from hard disk 80 is instructed, the hard disk processing section 19 reads out compressed image data stored in hard disk 80 and causes compression memory 17a of image memory 17 to store the compressed image data thus read out.

The image reading section 20 is composed of ADF section 21, scanner section 22 and reading control section 23. Following an instruction from image control section 11, the reading control section 23 controls the ADF section 21 and the scanner section 22 to cause optical scanning on the document surface to be practiced, and outputs analog image signals thus obtained through reading to read-processing section 15 of the control section 10.

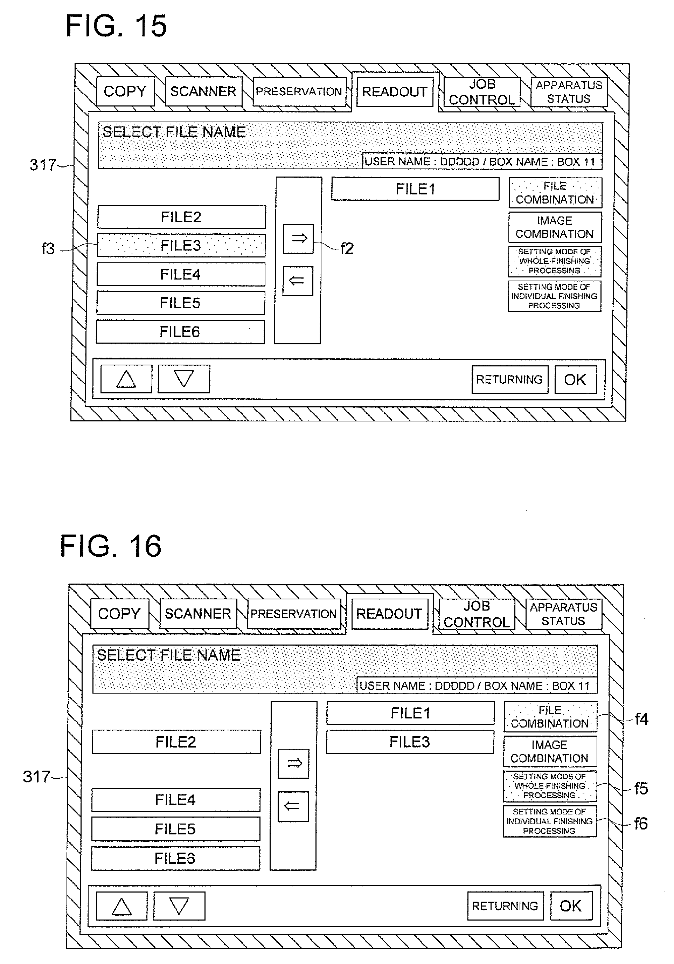

The operation section 30 is composed of a touch panel that is structured solidly with display section 31, various types of functional buttons and operation section control section 32. The operation section control section 32 outputs operation signals operated by various functional buttons or by a touch panel to image control section 11. In adition, the operation section control section 32 causes display section 31 to display various types of operation image areas and various types of processing results, following the instruction from image control section 11. The operation section 30 is a mode selection means to select either total post-processing setting bode button f5 or individual post-processing setting bode button f6 in file name selection image area 317 (see Fig. 16) displayed on display section 31.

The printer section 40 is composed of various portions relating to printing such as image forming section 42 and printer control section 43. Following an instruction from the image control section 11, the printer control section 43 controls operations of respective portions of the printer section 40 so that images may be formed on printing paper based on image data inputted from write-processing section 18.

The sheet-feeding unit 50 is composed of sheet-feeding trays 51 - 54 shown in Fig. 1. Post-processing unit 60 conducts various post-processing on printing paper after image forming outputted from the printer section 40.

Print controller section 70 converts image data received from outer PC (personal computer) through communication lines such as LAN (Local Area Network) into data capable of forming images, and outputs them to DRAM control IC 16.

Next, operations in the First Embodiment will be explained.

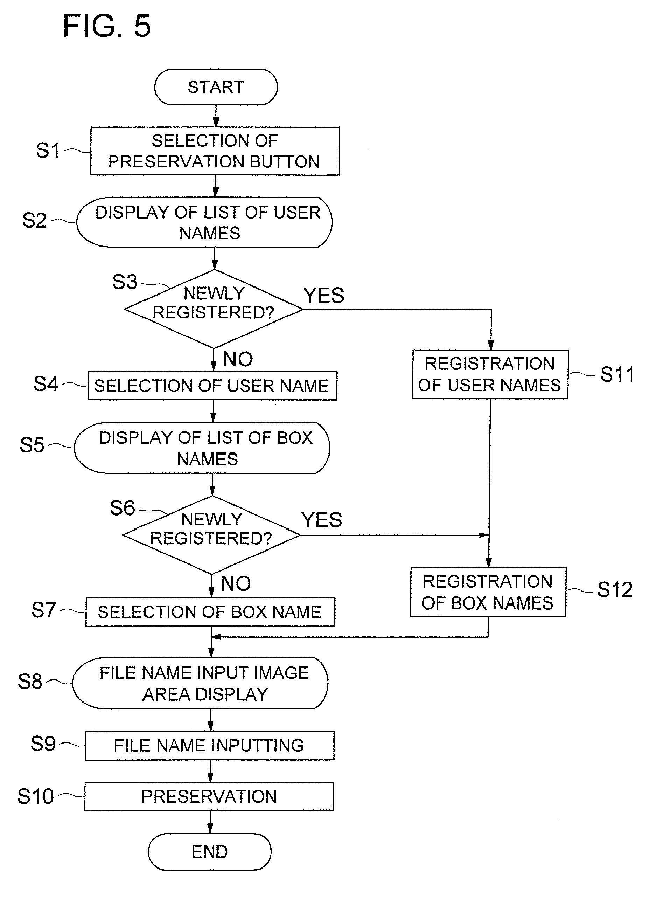

First, file preservation processing conducted by image forming apparatus 1 will be explained, referring to Fig. 5. The file preservation processing is processing to preserve image data in hard disk 80 of the image forming apparatus 1, and it can be realized by cooperation of CPU of image control section 11 and programs stored in program memory 12. Incidentally, image data to be preserved may be either those obtained by image reading section 20 and by read-processing section 15, or those inputted from outer PC through a network.

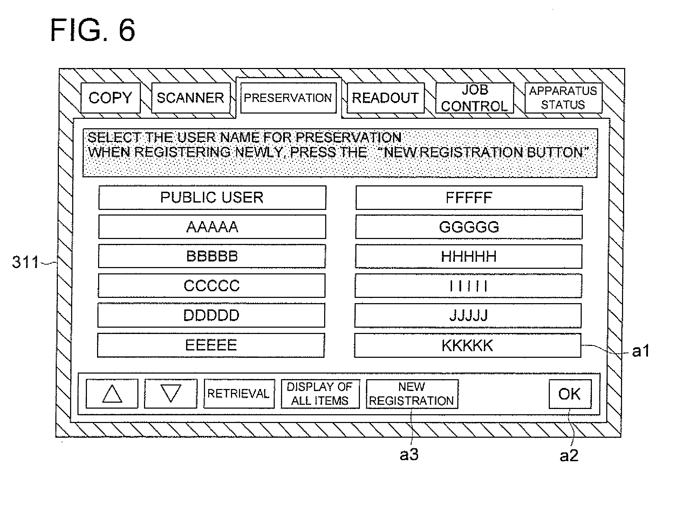

As shown in Fig. 5, when a preservation button is selected first by a user in an operation image area displayed on display section 31 of operation section 30 (step S1), a user name representing a name of folder of a user layer (hereinafter referred to as a user folder) is acquired from hard disk 80, and a list of user names is displayed on display section 31 (step S2). Fig. 6 shows an example of display of user name selection image area 311 (list of user names).

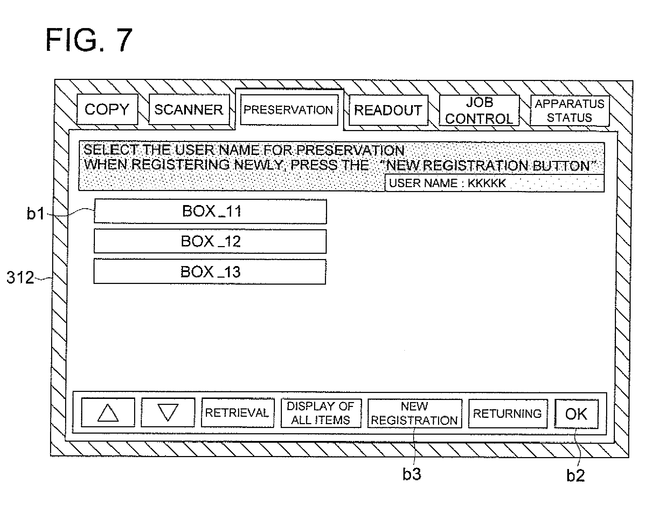

If a user name is not registered newly in this case (step S3; NO), any one of user names (for example, "KKKKK" a1) is selected by a user from the list of user names (step S4) in user name selection image area 311, and OK button a2 is pressed. Then, a BOX name representing a name of folder of a lower layer of a user folder of the selected user name (hereinafter referred to as BOX folder) is acquired from hard disk 80, and a list of BOX names is displayed on display section 31 (step S5). Fig. 7 shows an example of display of BOX name selection image area 312 (list of BOX names). Fig. 7 is an example wherein BOX folders "BOX_11", "BOX_12" and "BOX_13" in the lower layer of user folder "KKKKK" are displayed.

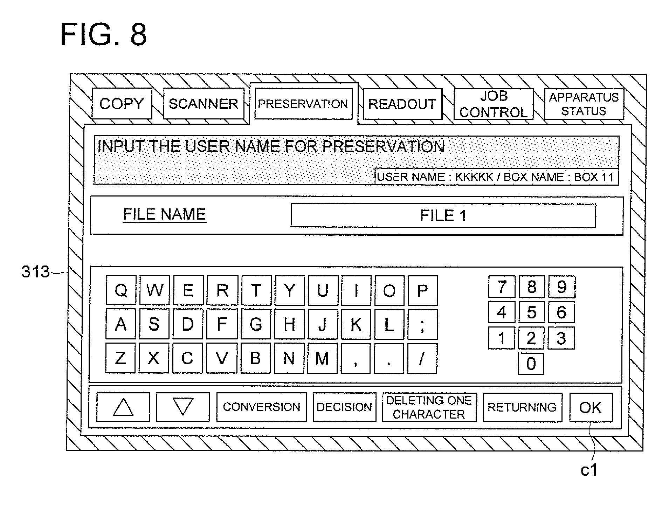

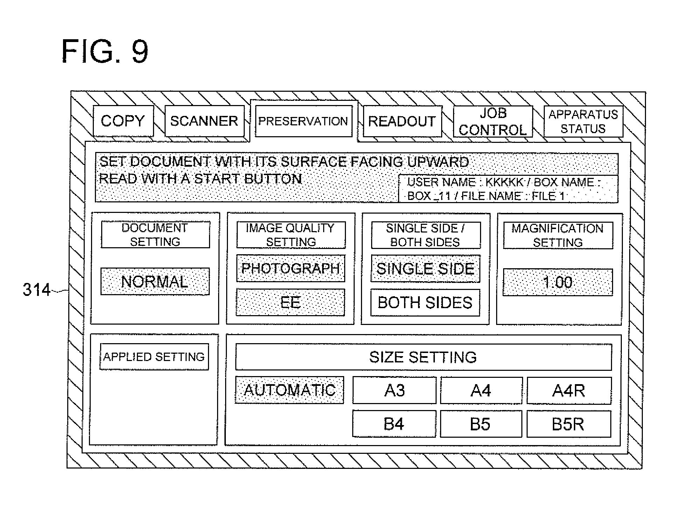

If a BOX name is not registered newly in BOX name selection image area 312 (step S6; NO), any one of BOX names (for example, "BOX_11" b1) is selected by a user from the list of user names (step S7), and OK button b2 is pressed. Then, file name input image area 313 of image data is displayed on display section 31 (step S8). The file name input image area 313 shown in Fig. 8 is an example in the case where image data are preserved in BOX folder "BOX_11" in the lower layer of user folder "KKKKK". In file name input image area 313, if the file name is inputted (step S9) and OK button c1 is pressed, reading image area 314 shown in Fig. 9 is displayed on display section 31. When reading conditions are established in reading image area 314 and a start button of the operation section 30 is pressed, image reading b6y image reading section 20 is conducted based on the established reading conditions, and image data are preserved in hard disk 80 under the file name inputted in step S9 (step S10). Now, the image data are preserved together with post-processing conditions in the case of outputting the image data.

When registering the user name newly in step S3 (step S3; YES), newly registering button a3 is pressed in user name selection image area 311 shown in Fig. 6, and a user name input image area is displayed on display section 31. Then, a new user name is registered in the user name input image area (step S11). Next, the BOX name input image area is displayed on display section 31, and new BOX name is registered (step S12), and a step moves to step S8.

When registering the BOX name newly in step S6 (step S6; YES), newly registering button b3 is pressed in BOX name selection image area 312 shown in Fig. 7, and a BOX name input image area is displayed on display section 31. Then, a new BOX name is registered in the BOX name input image area (step S12) and a step moves to step S8.

Thus, the file preserving processing is terminated.

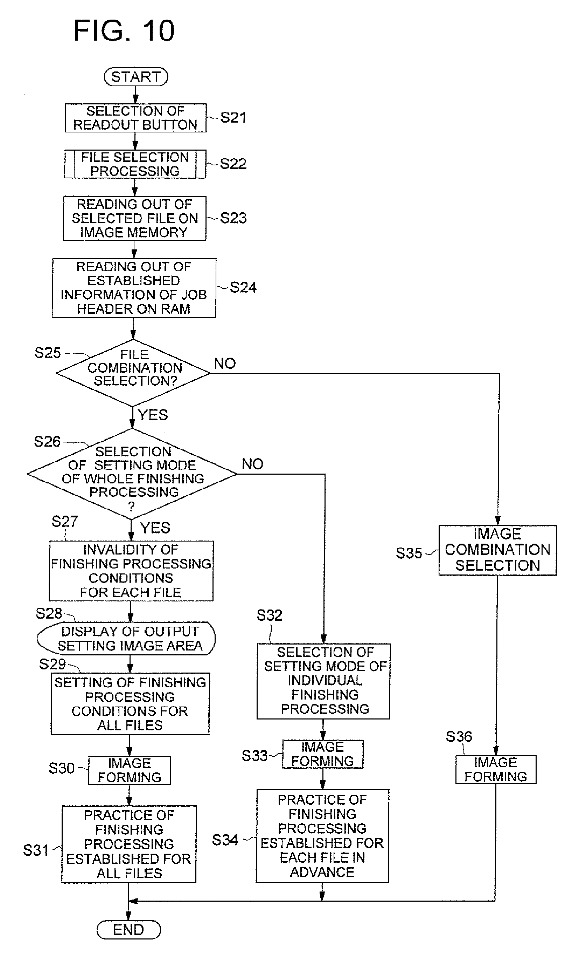

Next, file combination processing A practiced by image forming apparatus 1 will be explained as follows, referring to Fig. 10. The file combination processing A is processing to read plural files from hard disk 80 and to combine the files, and it is realized by cooperation of CPU of image control section 11 and a program stored in program memory 12.

AS shown in Fig. 10, when a reading button is selected first by a user on an operation image area displayed on display section 31 of operation section 30 (step S21), file selection processing is conducted (step S22).

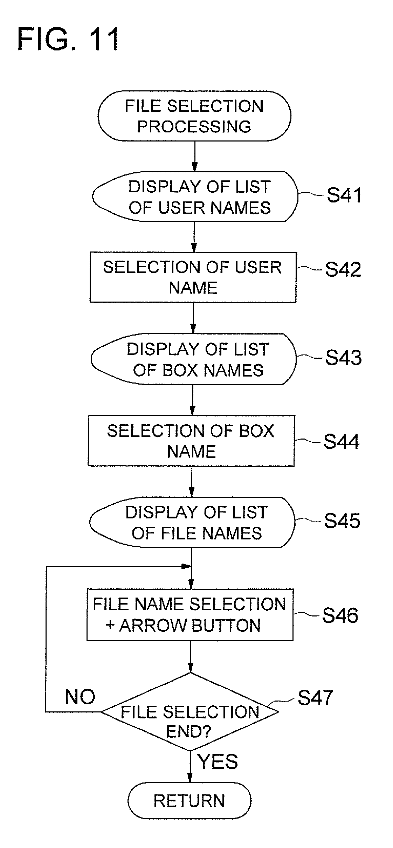

Fig. 11 is a flow chart showing the file selection processing.

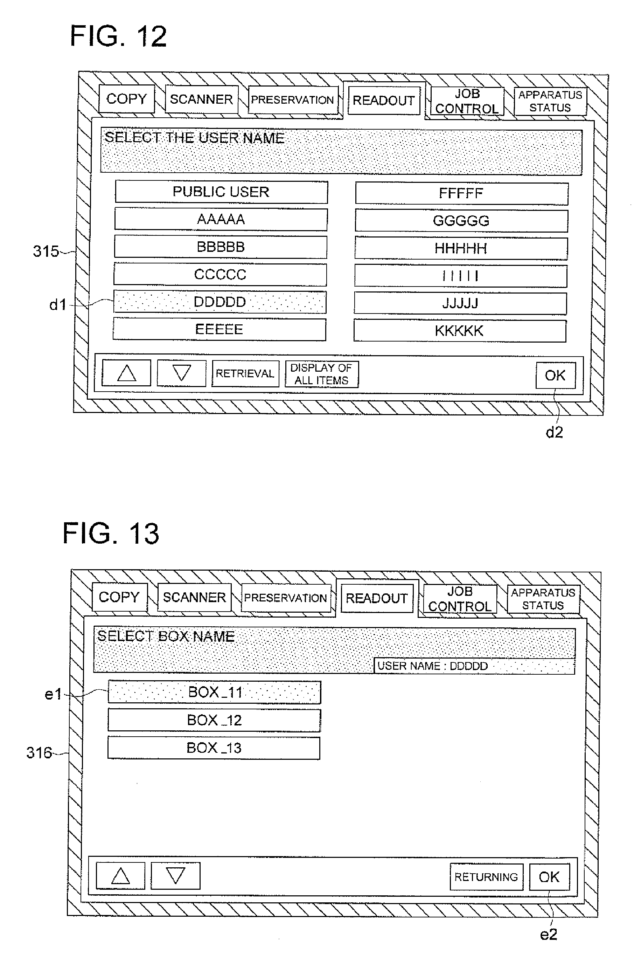

As shown in Fig. 11, a user name is acquired first from hard disk 80, and a list of user names is displayed on display section 31 (step S41). Fig. 12 shows an example of display on user name selection image area 315 (list of user names).

If any user name (for example, "DDDDD" d1) is selected from a list of user names by a user, in user name selection image area 315 (step S42), and OK button d2 is pressed, a BOX name of the lower layer of the user folder of the selected user name is acquired, and a list of BOX names is displayed on display section 31 (step S43). Fig. 13 shows an example of display of BOX name selection image area 316 (list of BOX names). Fig. 13 is an example wherein BOX folders "BOX_11", "BOX_12" and "BOX_13" in the lower layer of user folder "DDDDD" are displayed.

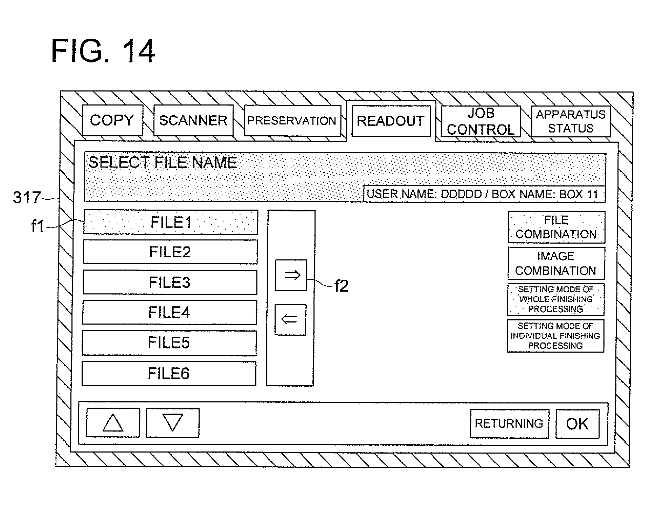

If any BOX name (for example, "BOX_11" e1) is selected from a list of BOX names by a user (step S44), in BOX name selection image area 316, and OK button e2 is pressed, a file name stored in BOX folder of the selected BOX name is acquired from hard disk 80, and a list of file names is displayed on display section 31 (step S45). Fig. 14 shows an example of display of file name selection image area 317 (list of file names). In the file name selection image area 317, if a file name ("FILE1" f1 in this case) that is to be read from a list of file names is selected by a user, and arrow button f2 is pressed (step S46), there comes the situation wherein "FILE1" is selected as shown in Fig. 15. When the selection of files is not terminated in this case (step S47; NO), a file name ("FILE3" f3 in this case) to be read out from a list of file names is further selected in the file name selection image area 317, and arrow button f2 is pressed (step S46). Then, there comes the situation wherein "FILE1" and "FILE3" are selected as shown in Fig. 16. When the file selection is terminated in step S47 (step S47; YES), a step moves to step S23 of file combination processing A shown in Fig. 10.

Next, a step returns to Fig. 10, the selected file is read out on image memory 17 from hard disk 80 (step S23), and establishment information recorded on JOB header is read out on RAM 13 from image memory 17 (step S24).

Next, whether the file combination is selected or not is judged in file name selection image area 317 (step S25). The file name selection image area 317 shown in Fig. 16 indicates the state wherein file combination button f4 is selected.

When the file combination is selected (step S25; YES), a total post-processing setting mode is judged whether it is selected or not (step S26). When the file combination is selected in file name selection image area 317 shown in Fig. 16, total post-processing setting mode button f5 or individual post-processing setting mode button f6 is selected. When the total post-processing setting mode is selected (step S26; YES), post-processing conditions of each selected file are invalidated (step S27). Specifically, post-processing conditions of each file are set to be invalid, about establishment information of JOB header read out by RAM 13. For example, among establishment information of JOB header shown in Fig. 3 (b), all of the post-processing such as a staple mode, a punch mode and a folding mode are set to be OFF.

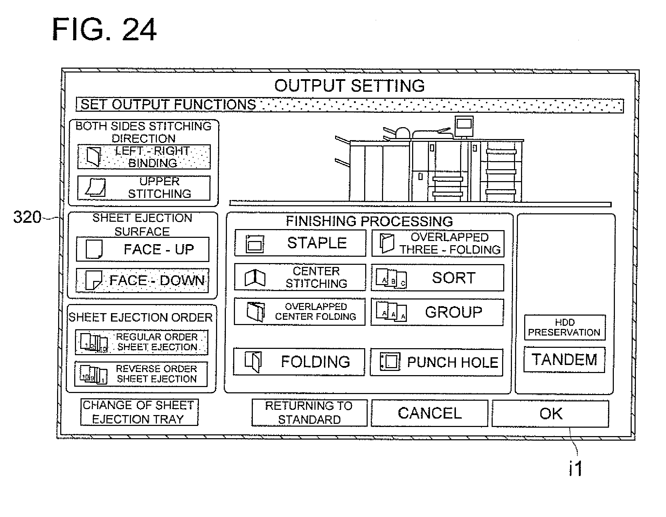

Next, output setting image area (see Fig. 24) is displayed on display section 31 (step S28), and in the output setting image area, post-processing conditions are set newly for all of the plural files (see Fig. 29). To be concrete, although post-processing conditions of establishment information of JOB header read out on RAM 13 are established once to be OFF in step S27, information of RAM 13 is overwritten based on the post-processing conditions selected newly. Output establishment information overwritten in this case is read out by image control section 11, to be notified to post-processing unit 60 through printer control section 43.

Then, images are formed by image forming section 42 (step S30), and post-processing is conducted by post-processing unit 60 based on post-processing conditions established for all of the plural files (step S31).

When a total post-processing setting mode is not selected in step S26 (step S26; NO), an individual post-processing setting mode is selected (step S32). In this case, image forming is conducted by image forming section 42 (step S33), and post-processing is conducted by post-processing unit 60 based on post-processing conditions established in advance for each file (step S34).

When a file combination is not selected in step S25 (step S25; NO), an image combination is selected (step S35). When an image combination is selected, images only are compounded to be outputted, independently of post-processing conditions established for each file. Therefore, images are formed by image forming section 42 (step S36) and are outputted without conducting post-processing.

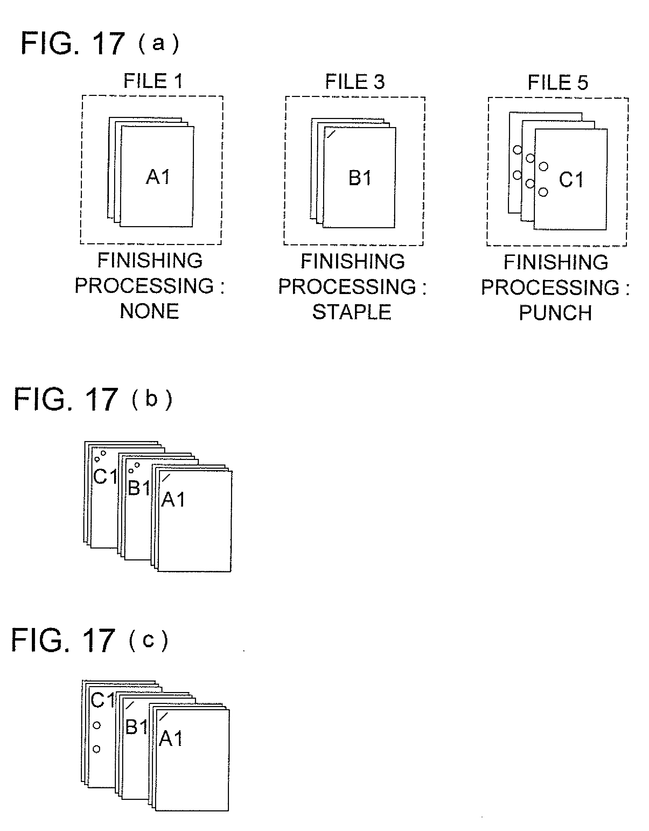

Fig. 17 (a) shows an example of the file selected as a target to be subjected to file combination. FILE1 is established without post-processing, while, stapling is established for FILE3 as post-processing conditions and punching is established for FILE5 as post-processing conditions. After a total post-processing setting mode is selected, output setting image area (see Fig. 24) is displayed, and the post-processing selected in this case results in post-processing for the whole files. Fig. 17 (b) shows an output image in the case where a total post-processing setting mode is selected and stapling is established for all of the selected files. Post-processing conditions established for each file are invalidated, and FILE1, FILE3 and FILE5 are collectively subjected to staple processing. Further, Fig. 17 (c) shows an output image in the case where an individual post-processing setting mode is selected. In this case, post-processing is conducted for each file based on post-processing conditions for each of FILE1, FILE3 and FILE5.

As explained above, in image forming apparatus 1, it is possible to invalidate post-processing conditions for each of plural files, and to select an occasion to establish new post-processing conditions for all files or an occasion to output under the condition of maintaining post-processing conditions for each of plural files, which makes it possible to conduct post-processing that satisfies user's intention, when outputting plural files by combining them.

Incidentally, in the First Embodiment, a judgment whether the file combination is selected or not (step S25), a judgment whether either of a total post-processing setting mode and an individual post-processing setting mode is selected or not (step S26) and establishment of post-processing conditions for all files in the case where a total post-processing setting mode is selected (step S29) are conducted, after a plurality of files to be combined are selected. However, these processes mentioned above may also be conducted in the course of processing in step S45 - step S47 in the file selection processing shown in Fig. 11.

### (Second Embodiment)

Next, Second Embodiment to which the present invention is applied will be explained.

Since an image forming apparatus in the Second Embodiment is the same as the image forming apparatus 1 in the First Embodiment in terms of a structure, the same constituents as those in the First Embodiment are given the same symbols, and illustrations and explanations for them will be omitted here. The structure and processing which are specific to the Second Embodiment will be explained as follows.

Image control section 11 further makes it possible to add to all of the plural files only post-processing conditions which are allowed in advance to add to each of plural files in relationship with post-processing conditions established in advance for each file, when an individual post-processing setting mode is selected, and conducts post-processing control so that post-processing may be conducted based on post-processing conditions established in advance on each of plural files and on post-processing conditions added to all of the plural files. The post-processing conditions allowed in advance to be added are those which make any post-processing established in advance for each file to be practiced effectively, when they are practiced together with post-processing based on post-processing conditions established in advance for each file. As a combination of post-processing conditions established in advance for each file and post-processing conditions which are not allowed to be combined, there are given, for example, staple left and staple right, staple left (or staple right) and staple upper, staple one location and staple two locations, punch left and punch right, punch left (or punch right) and punch upper, and difference of folding mode (center folding, three-folding, four-folding, double-door folding, Z-shaped folding.

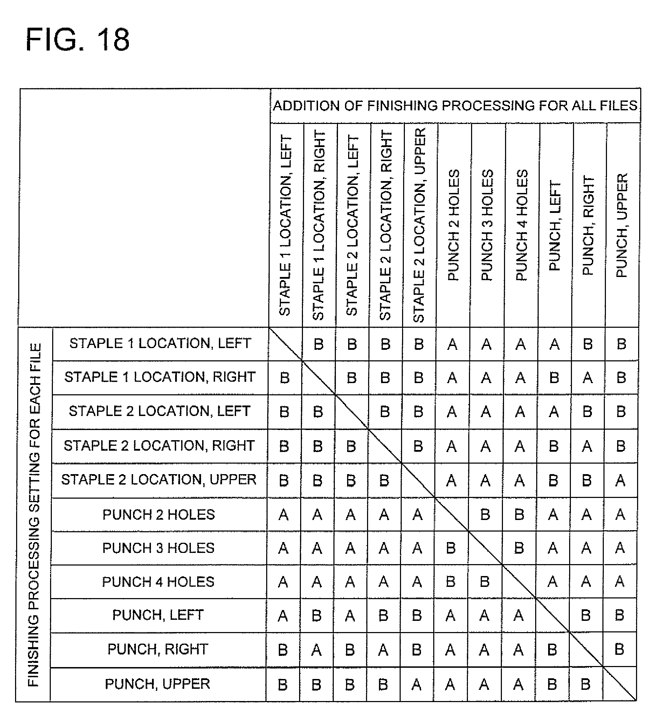

Fig. 18 shows a judgment table showing whether post-processing for all files can be added to post-processing established for each file or not. The symbol "A" in the judgment table shows an occasion wherein the post-processing can be added, while, the symbol "B" shows an occasion wherein the post-processing can not be added. When the judgment table tells that addition of post-processing is allowed to all files, the post-processing can be added. Incidentally, the judgment table is stored in memory section 14.

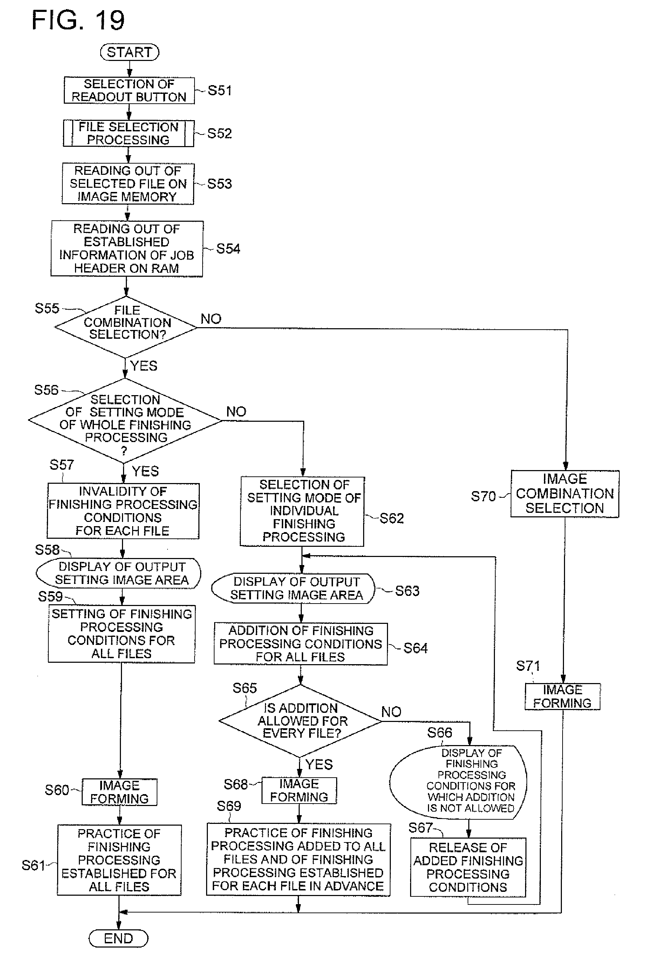

Referring to Fig. 19, file combination processing B practiced by an image forming apparatus in the Second Embodiment will be explained. The file combination processing B is processing to read plural files from hard disk 80 to combine them, and it is realized by cooperation of CPU of image control section 11 and a program stored in program memory 12.

As shown in Fig. 19, if a reading button is pressed by a user on the operation image area displayed on display section 31 of operation section 31 (step S51), file selection processing is conducted (step S52). An explanation of the file selection processing will be omitted, because it is the same as the file selection processing (see Fig. 11) explained in the First Embodiment. Further, an explanation of steps S53 - S61 will also be omitted, because they are the same as steps S23 - S31 in Fig. 10.

When a total post-processing setting mode is not selected in step S56 (step S56; NO), an individual post-processing setting mode is selected (step S62). In this case, output setting image area (see Fig. 24) is displayed on display section 31 (step S63) and post-processing conditions are added to the all file selected (step S64). Then, the added post-processing conditions are judged whether they are allowed to be added in advance in relationship with post-processing conditions established for each file, for all files, based on the judgment table in Fig. 18 stored in memory section 1 (step S65). For example, when there exists a file wherein "staple left" is established, if "staple right" is established additionally as the whole, the addition is not allowed, because stapling cannot be conducted at right and left.

If the added post-processing conditions are not allowed to be added for any file (step S65; NO), post-processing conditions which are not allowed to be added are displayed on display section 31 (step S66), and the added post-processing conditions are canceled (step S67). Then, a step returns to step S63.

When the added post-processing conditions are allowed to be added for all files in Step S65 (step S65; YES), post-processing conditions newly added are added to post-processing conditions of establishment information of JOB header of each file read out on RAM 13, and information of RAM 13 is overwritten. Output establishment information overwritten in this case is read out by image control section 11, to be notified to post-processing unit 60 through printer control section 43.

Then, images are formed by image forming section 42 (step S68), and post-processing is conducted by post-processing unit 60 based on post-processing conditions added to all files and on post-processing conditions established in advance for each file (step S69).

When a file combination is not selected in step S55 (step S55; NO), an image combination is selected (step S70), and image forming is conducted by image forming section 42 (step S71), and output is made without conducting post-processing.

As explained above, in the second image forming apparatus, it is possible to practice post-processing satisfying a user's intention, because addition of post-processing conditions can be made possible for all files when individual post-processing setting mode is selected. Further, for each file to be combined, addition of post-processing conditions which are not allowed to be added in advance in relationship with post-processing conditions established for each file can be prevented from being added to all files.

### (Third Embodiment)

Next, Third Embodiment to which the present invention is applied will be explained.

Since an image forming apparatus in the Third Embodiment is the same as the image forming apparatus 1 in the First Embodiment in terms of a structure, the same constituents as those in the First Embodiment are given the same symbols, and illustrations and explanations for them will be omitted here. The structure and processing which are specific to the Third Embodiment will be explained as follows.

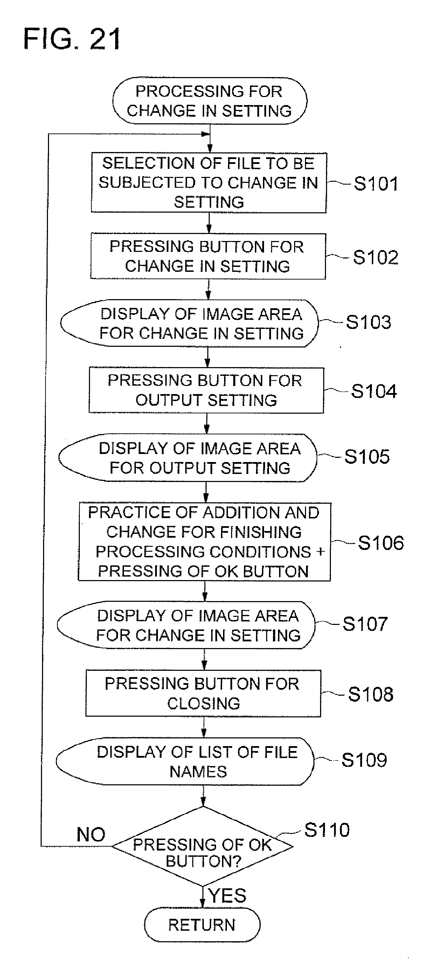

Image control section 11 conducts post-processing control so that addition or modification of post-processing conditions may be made possible for post-processing conditions established in advance for each of plural files when an individual post-processing setting mode is selected (see Fig. 21), post-processing may be conducted based on added or modified post-processing conditions for the file whose post-processing conditions are added or modified, and post-processing may be conducted based on post-processing conditions established in advance for the file whose post-processing conditions are not added or modified.

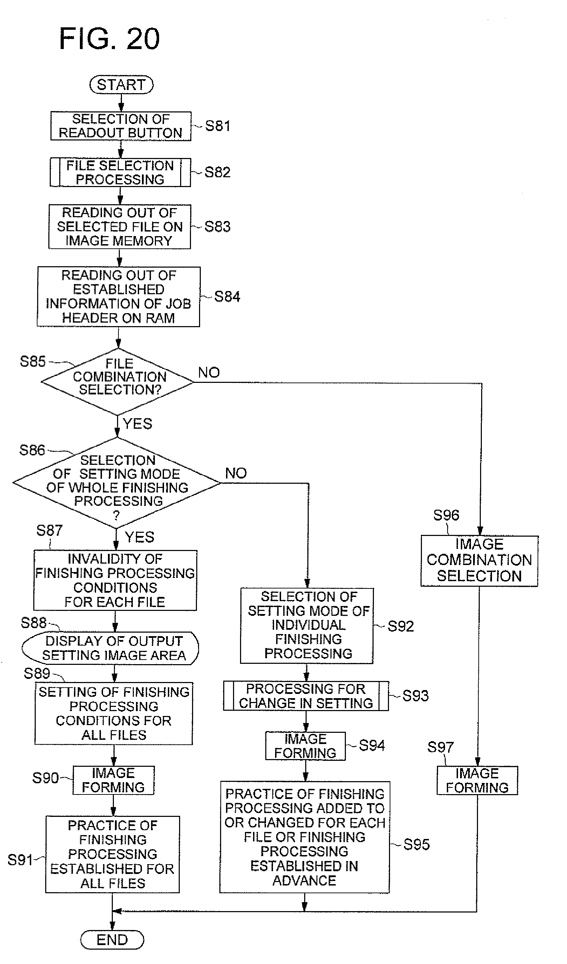

Referring to Fig. 20, file combination processing C practiced by an image forming apparatus in the Third Embodiment will be explained. The file combination processing C is processing to read plural files from hard disk 80 to combine them, and it is realized by cooperation of CPU of image control section 11 and a program stored in program memory 12.

As shown in Fig. 20, if a reading button is pressed by a user on the operation image area displayed on display section 31 of operation section 31 (step S81), file selection processing is conducted (step S82). An explanation of the file selection processing will be omitted, because it is the same as the file selection processing (see Fig. 11) explained in the First Embodiment. Further, an explanation of steps S83 - S91 will also be omitted, because they are the same as steps S23 - S31 in Fig. 10.

When a total post-processing setting mode is not selected in step S86 (step S86; NO), an individual post-processing setting mode is selected (step S92). Then, establishment change processing is conducted (step S93).

Fig. 21 is a flow chart showing establishment change processing.

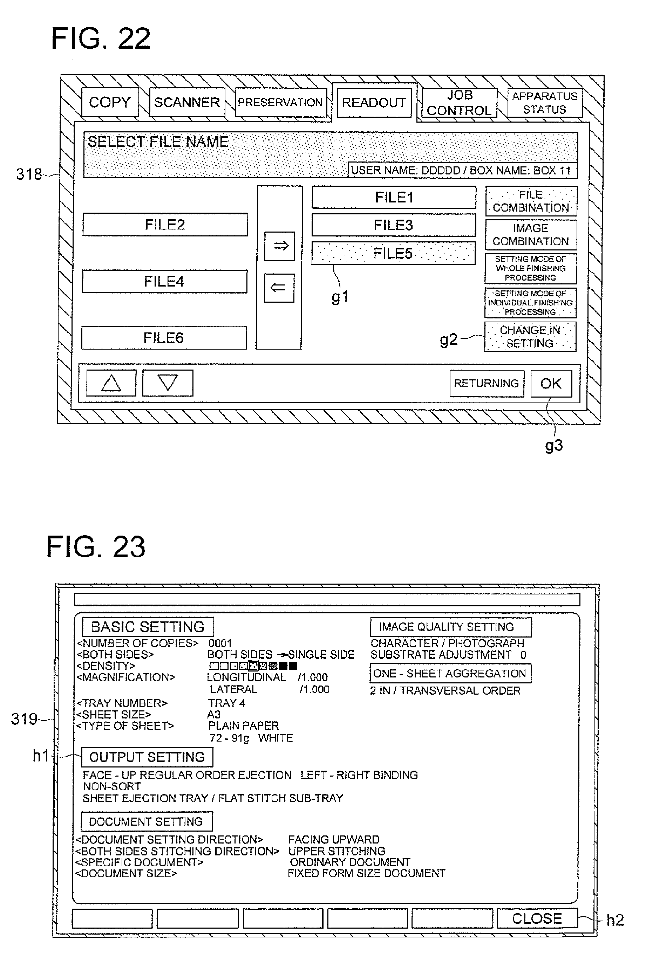

As shown in Fig. 21, a file representing a target of establishment change is selected from files to be combined by a user (step S101). For example, in file name selection image area 318 shown in Fig. 22, a file ("FILE 5" g1, in this case) representing a target of establishment change is selected.

Next, when establishment change button g2 is pressed in file name selection image area 318 (step S102), establishment change image area 319 is displayed on display section 31 (step S103). Fig. 23 shows an example of display of establishment change image area 319. If output setting button h1 is pressed in the establishment change image area 319 (step S104), output setting image area 320 is displayed on display section 31 (step S105). Fig. 24 shows an example of display of output setting image area 320.

Next, when addition or change of post-processing conditions is conducted and OK button il is pressed in the output setting image area 320 (step S106), information of RAM 13 is overwritten based on added or changed post-processing conditions, for post-processing conditions of establishment information of JOB header of each file read out on RAM 13. Output establishment information overwritten in this case is read out by image control section 11, to be notified to post-processing unit 60 through printer control section 43.

Then, when the establishment change image area 319 shown in Fig. 23 is displayed on display section 31 (step S107) and closing button h2 is pressed on the establishment change image area 319 (step S108), the file name selection image area 318 (list of file names) shown in Fig. 22 is displayed on the display section 31 (step S109). When OK button g3 is not pressed on the file name selection image area 318 (step S110; NO), a step returns to step S101 in which establishment changes are repeated for other files. When OK button g3 is pressed in the file name selection image area 318 (step S110; YES), a step moves to step S94 of file combination processing C shown in Fig. 20.

Then, image forming is conducted by image forming section 42 in Fig. 20 (step S94). Then, post-processing is conducted by the post-processing unit 60 based on the post-processing conditions added or changed, for the files whose post-processing conditions have been added or changed, and post-processing is conducted based on the post-processing conditions established in advance for the files whose post-processing conditions have not been added or changed (step S95).

When file combination is not selected in step S85 (step S85; NO), image combination is selected (step S96), and image forming is conducted by image forming section 42 (step S97) to be outputted without any post-processing.

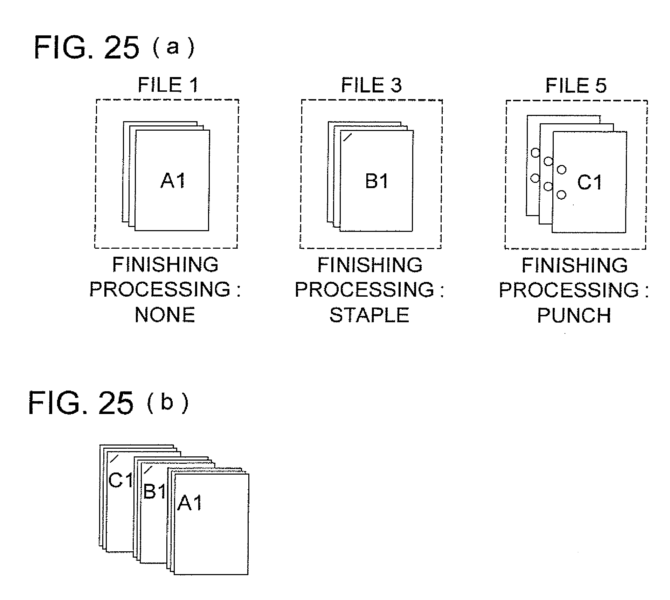

Fig. 25 (a) shows an example of the file selected as a target to be subjected to file combination. FILE1 is established to have no post-processing, FILE3 is established to have stapling as post-processing condition and FILE5 is established to have punching as post-processing condition. Fig. 25 (b) shows output image in the case wherein an individual post-processing setting mode is selected, and a post-processing condition for FILE5 has been changed from punching to stapling. For each of FILE1 and FILE3, post-processing is carried out based on the post-processing conditions established in advance, and for FILE5, staple processing is carried out based on the post-processing conditions which have been changed.

As explained above, in the image forming apparatus in the Third Embodiment, when an individual post-processing setting mode is selected, post-processing conditions are added or changed for the post-processing conditions established in advance, whereby, it is possible to carry out post-processing that satisfies user's intention.

In the Third Embodiment, an explanation has been given for the occasion wherein establishment change processing is conducted after plural files to be combined are selected, specifically, after the file to be combined moves to the area on the right side. However, it is also possible to conduct the establishment change processing before the plural files to be combined are selected.

Incidentally, the description in each of the aforesaid embodiments is an example of an image forming apparatus relating to the present invention, to which, however, the invention is not limited. Detailed structures and detailed operations of each portion constituting the image forming apparatus may also be varied properly without departing from the spirit and scope of the invention.

For example, a preserving means to preserve files is preferably a nonvolatile memory, although it may also be a memory medium such as DVD (Digital Versatile Disk) without being limited to hard disk 80.

In the above embodiments, it is possible for a user to conduct post-processing that satisfies an intension of the user, when combining plural files for outputting.

Also, in the embodiments, it is possible to prevent that post-processing conditions which are not allowed to be added in relationship with post-processing conditions established in advance for each file are added to all of the files, for each of the files to be combined.

Also, in the embodiments, it is possible to conduct post-processing which satisfies an intension of a user, by conducting addition or change of post-processing conditions for the post-processing conditions established in advance for each of the files to be combined.

In the embodiments, it is possible to conduct post-processing which satisfies an intension of a user, because post-processing conditions can be added to all files, when outputting plural files by combining them.

In the embodiments, it is possible to conduct post-processing which satisfies an intension of a user, by conducting addition or change of post-processing conditions for post-processing conditions established in advance for each of files to be combined, when outputting plural files by combining them.

In the embodiments, it is possible to conduct post-processing which satisfies an intension of a user, by conducting addition or change of post-processing conditions for post-processing conditions established in advance for each of files to be combined, when outputting files preserved in nonvolatile memory by combining them.

In the embodiments, it is possible to preserve files including image data and post-processing conditions in the case of outputting the image data, in a preserving means.

## Claims

1. An image forming apparatus, comprising:
a storage section which stores a file including an image data and a predetermined post-processing condition, a post-processing being conducted for a recording medium based on the post-processing condition;
a reading section which reads out a plurality of files to be combined from the storage section;
a combination section which combines the plurality of files read out from the storage section to produce a combined file;
an image forming section which forms an image on the recording medium based on the combined file;
a post-processing section which post-processes the recording medium on which the image is formed; and
a control section which controls the post-processing section,
wherein the control section controls the post-processing section to conduct a first mode in which the control section invalidates the predetermined post-processing condition set to each of the plurality of files and a post-processing is conducted based on a post-processing condition set to the whole of the plurality of files, or a second mode in which a post-processing is conducted based on the predetermined post-processing condition set to each of the plurality of files.

2. The image forming apparatus of claim 1, further comprising a mode selection section for selecting one mode from the first post-processing mode and the second post-processing mode.

3. The image forming apparatus of claim 2, further comprising a post-processing decision section which decides a post-processing condition in accordance with the mode selected by the mode selection section,
wherein the control section controls the post-processing section to post-process based on the post-processing condition decided by the post-processing decision section.

4. The image forming apparatus of claim 2 or 3, further comprising a post-processing condition adding section which adds a post-processing condition,
wherein if the second post-processing mode is selected, the post-processing condition adding section adds only a post-processing condition or post-processing conditions, which is allowed to be added in relation to the predetermined post-processing condition set to each of the plurality of files, to the plurality of files, and
the control section controls the post-processing section to post-process the plurality of files based on the predetermined post-processing condition set to each of the plurality of files and the post processing condition added by the post-processing condition adding section.

5. The image forming apparatus of claim 2 or 3, further comprising a post-processing condition adding or modifying section which adds a post-processing condition or modifies the predetermined post-processing condition,
wherein if the second mode is selected, the control section controls the post-processing section to post-process a file, whose post-processing condition is added or modified, based on the added or modified post-processing condition or to post-process a file, whose post-processing condition is not added or modified, based on the predetermined post-processing condition.

6. The image forming apparatus of claim 1, 2, 3, 4 or 5 wherein the storage section is a nonvolatile memory.

7. The image forming apparatus of claim 1, 2, 3, 4 or 5, wherein the storage section is a hard disk.

8. An image forming apparatus, comprising:
a storage section which stores a file including an image data and a predetermined post-processing condition, a post-processing being conducted for a recording medium based on the post-processing condition;
a reading section which reads out a plurality of files to be combined from the storage section;
a combination section which combines the plurality of files read out from the storage section to produce a combined file;
an image forming section which forms an image on a recording medium based on the combined file;
a post-processing section which post-processes the recording medium on which the image is formed;
a post-processing condition adding section which adds a post-processing condition, wherein if the second post-processing mode is selected, the post-processing condition adding section adds only a post-processing condition, which is allowed to be added in relation to the predetermined post-processing condition set to each of the plurality of files, to the whole of the plurality of files; and
a control section which controls the post-processing section,
wherein the control section controls the post-processing section to post-process the plurality of files based on the predetermined post-processing condition and the post processing condition added by the post-processing condition adding section.

9. The image forming apparatus of claim 8, wherein the storage section is a nonvolatile memory.

10. The image forming apparatus of claim 8, wherein the storage section is a hard disk.

11. An image forming apparatus, comprising:
a storage section which stores a file including an image data and a predetermined post-processing condition, a post-processing being conducted for a recording medium based on the post-processing condition;
a reading section which reads out a plurality of files to be combined from the storage section;
a combination section which combines the plurality of files read out from the storage section to produce a combined file;
an image forming section which forms an image on a recording medium based on the combined file;
a post-processing section which post-processes the recording medium on which the image is formed;
a post-processing condition adding or modifying section which adds a post-processing condition or modifies the predetermined post-processing condition; and
a control section which controls the post-processing section,
wherein the control section controls the post-processing section to post-process a file, whose post-processing condition is added or modified, based on the added or modified post-processing condition or to post-process a file, whose post-processing condition is not added or modified, based on the predetermined post-processing condition.

12. The image forming apparatus of claim 11, wherein the storage section is a nonvolatile memory.

13. The image forming apparatus of claim 11, wherein the storage section is a hard disk.

14. A control method, comprising steps of:
reading out a plurality of files to be combined from a storage section which stores files, each of which including an image data and a predetermined post-processing condition by which a post-processing is conducted when the image data is outputted;
combining the plurality of files read out from the storage section to produce a combined file;
forming an image on a recording medium based on the combined file; and
post-processing the recording medium on which the image is formed,
wherein the post-processing step includes a step of conducting a first mode in which the predetermined post-processing condition set to each of the plurality of files is invalidated and a post-processing is conducted based on a post-processing condition set to the whole of the plurality of files, or a second mode in which a post-processing is conducted based on the predetermined post-processing condition set to each of the plurality of files.

15. A control method, comprising steps of:
reading out a plurality of files to be combined from a storage section which stores files, each of which including an image data and a predetermined post-processing condition by which a post-processing is conducted when the image data is outputted;
combining the plurality of files read out from the storage section to produce a combined file;
forming an image on a recording medium based on the combined file;
adding a post-processing condition; and
post-processing the recording medium on which the image is formed,
wherein, in the post-processing condition adding step, only a post-processing condition, which is allowed to be added in relation to the predetermined post-processing condition set to each of the plurality of files, is added to the whole of the plurality of files, and
in the post-processing step, post-processing the plurality of files based on the predetermined post-processing condition set to each of the plurality of files and the post processing condition added in the post-processing condition adding step.

16. A control method, comprising steps of:
reading out a plurality of files to be combined from a storage section which stores files, each of which includs an image data and a predetermined post-processing condition by which a post-processing is conducted when the image data is outputted;
combining the plurality of files read out from the storage section to produce a combined file;
forming an image on a recording medium based on the combined file;
adding a post-processing condition or modifying the predetermined post-processing condition; and
post-processing the recording medium on which the image is formed,
wherein, in the post-processing step, post-processing a file, whose post-processing condition is added or modified, based on the added or modified post-processing condition, or post-processing a file, whose post-processing condition is not added or modified, based on the predetermined post-processing condition.

17. A program for making a computer to execute a process, the process comprising steps of:
reading out a plurality of files to be combined from a storage section which stores files, each of which includs an image data and a predetermined post-processing condition by which a post-processing is conducted when the image data is outputted;
combining the plurality of files read out from the storage section to produce a combined file;
forming an image on a recording medium based on the combined file; and
post-processing the recording medium on which the image is formed,
wherein the post-processing step includes a step of conducting a first mode in which the predetermined post-processing condition set to each of the plurality of files is invalidated and a post-processing is conducted based on a post-processing condition set to the whole of the plurality of files, or a second mode in which a post-processing is conducted based on the predetermined post-processing condition set to each of the plurality of files.

18. The program of claim 17, wherein the computer is made to execute a process comprising steps of:
selecting one mode from the first processing mode and the second processing mode; and
deciding a post-processing condition based on a mode selected in the step of selecting.

19. The program of claim 18, wherein the computer is made to execute a process comprising a step of adding a post-processing condition,
wherein when the second post-processing mode is selected, in the post-processing condition adding step, a post-processing condition, which is allowed to be added in relation to the predetermined post-processing condition set to each of the plurality of files, is added to the whole of the plurality of files, and
in the post-processing step, post-processing the plurality of files based on the predetermined post-processing condition set to each of the plurality of files and the post processing condition added in the post-processing condition adding step.

20. The program of claim 18, wherein the computer is made to execute a process comprising a step of adding or modifying a post-processing condition,
wherein when the second mode is selected, in the post-processing step, post-processing a file, whose post-processing condition is added or modified, based on the added or modified post-processing condition, or post-processing a file, whose post-processing condition is not added or modified, based on the predetermined post-processing condition.

21. The program of claim 17, 18, 19 or 20, wherein the computer is made to execute a process comprising a step of storing a file including an image data and a predetermined post-processing condition by which a post-processing is conducted when the image data is outputted in the storage section.

22. A program for making a computer to execute a process, the process comprising steps of:
reading out a plurality of files to be combined from a storage section which stores files, each of which including an image data and a predetermined post-processing condition by which a post-processing is conducted when the image data is outputted;
combining the plurality of files read out from the storage section to produce a combined file;
forming an image on a recording medium based on the combined file;
adding a post-processing condition; and
post-processing the recording medium on which the image is formed,
wherein, in the post-processing condition adding step, only a post-processing condition, which is allowed to be added in relation to the predetermined post-processing condition set to each of the plurality of files, is added to the whole of the plurality of files, and
in the post-processing step, post-processing the plurality of files based on the predetermined post-processing condition set to each of the plurality of files and the post processing condition added in the post-processing condition adding step.

23. The program of claim 22, wherein the computer is made to execute a process comprising a step of storing a file including an image data and a predetermined post-processing condition by which a post-processing is conducted when the image data is outputted in the storage section.

24. A program for making a computer to execute a process, the process comprising steps of:
reading out a plurality of files to be combined from a storage section which stores files, each of which includs an image data and a predetermined post-processing condition by which a post-processing is conducted when the image data is outputted;
combining the plurality of files read out from the storage section to produce a combined file;
forming an image on a recording medium based on the combined file;
adding a post-processing condition or modifying the predetermined post-processing condition; and
post-processing the recording medium on which the image is formed,
wherein, in the post-processing step, post-processing a file, whose post-processing condition is added or modified, based on the added or modified post-processing condition, or post-processing a file, whose post-processing condition is not added or modified, based on the predetermined post-processing condition.

25. The program of claim 24, wherein the computer is made to execute a process comprising a step of storing a file including an image data and a predetermined post-processing condition by which a post-processing is conducted when the image data is outputted in the storage section.
